# EUROPEAN PATENT APPLICATION

(11) **EP 1 873 265 A1**
(43) Date of publication of application: **02.01.2008**
(21) Application number: 06715376.7
(22) Date of filing: 08.03.2006
(51) Int. Cl.: C22B 34/12, C22B 9/02

(54) **METHOD OF HIGH-MELTING-POINT METAL SEPARATION AND RECOVERY**

(30) Priority: 15.03.2005 JP 2005072854
(71) Applicant: Sumitomo Titanium Corporation, Amagasaki-shi, Hyogo 660-8533 (JP)
(72) Inventor: OGASAWARA, Tadashi, cho, Amagasaki-shi, Hyogo 660-8533 (JP); YAMAGUCHI, Makoto, cho, Amagasaki-shi, Hyogo 660-8533 (JP); DAKESHITA, Katsunori, cho, Amagasaki-shi, Hyogo 660-8533 (JP); HORI, Masahiko, cho, Amagasaki-shi, Hyogo 660-8533 (JP)
(74) Representative: Simons, Amanda Louise
(86) International application number: PCT/JP2006/304456
(87) International publication number: WO 2006/098199

(57) **Abstract**

A TiCl₄ gas is supplied to a molten CaCl₂ liquid held in a reactor vessel 6 through a raw material feed pipe 11, TiCl₄ is reduced to produce granular metallic Ti by Ca melted in the CaCl₂ liquid. The molten CaCl₂ liquid in which Ti granules taken out downward from the reactor vessel 6 is mixed is delivered to a separation process 12, the molten CaCl₂ liquid is heated in a heating vessel 15, and separation is generated by a difference in specific gravity, whereby the molten CaCl₂ liquid 16 is located in an upper layer while a metallic Ti 17 is located in a lower layer. The metallic Ti 17 in the lower layer is taken out from a high-melting-point metal discharge port 18, and the metallic Ti 17 is solidified to yield an ingot. The molten CaCl₂ liquid 16 in the upper layer is delivered to an electrolysis process 13 along with the molten CaCl₂ liquid taken out from the reactor vessel 6, and Ca generated by the electrolysis and CaCl₂ are returned into the reactor vessel 6. A separation and recovery method of the invention is applied to the separation process 12 in the above production process, and high-quality Ti or Ti alloy is efficiently separated and recovered from the CaCl₂-containing molten salt with a small amount of energies

## Description

### TECHNICAL FIELD

The present invention relates to a method for separating and recovering a high-melting-point metal such as Ti by heating and melting a molten salt such as calcium chloride (CaCl₂) in which the high-melting-point metal.

### BACKGROUND ART

A Kroll method for reducing titanium tetrachloride (TiCl₄) by Mg is generally used as an industrial production method of the high-melting-point metal such as metallic Ti. In the Kroll method, molten Mg is loaded in a reactor vessel, a TiCl₄ liquid is supplied from above a liquid surface thereof, and the metallic Ti is produced by reducing TiCl₄ with Mg near the liquid surface of the molten Mg. The high-purity sponge Ti is obtained through the Kroll method.

However, in the Kroll method, a feed rate of TiCl₄ is restricted because reaction undergoes near the liquid surface of the molten Mg in the reactor vessel. Additionally, Ti granules produced are aggregated because of an adhesion property between Ti and the molten Mg, and the Ti granules are sintered to generate size-wise grown granules by the heat from the molten liquid. Therefore, it is difficult to taking out the produced Ti to the outside of the reactor vessel, and it is also difficult to continuously produce Ti.

There have been conducted many researches and developments in order to solve the above problems. For example, Japanese Patent Application Publication No. 2004-52037 proposes a metallic titanium refining method in which reduction is performed using Ca and a univalent calcium ion (Ca⁺) which are generated by electrolysis in a mixed molten salt including titanium oxide (TiO₂) calcium chloride (CaCl₂), calcium oxide (CaO), and/or calcium (Ca). International Patent Application No. 2002-517613 discloses a method for removing oxygen (O₂) from a metallic compound and the like (for example, TiO₂) by the electrolysis in the molten salt such as CaCl₂.

The inventors have also proposed a method in which a metallic chloride containing TiCl₄ is used as a raw material and Ti granules or Ti alloy granules are produced in the molten salt by causing the metallic chloride to react with Ca melted in the molten salt containing the molten CaCl₂. For example, the inventors disclose Japanese Patent Application Publication No. 2005-133195 in which, in order to economically replenish Ca in the molten salt, the Ca being consumed by the reducing reaction between TiCl₄ and Ca, Ca produced by the electrolysis of the molten CaCl₂ is utilized and Ca is circularly used.

The titanium oxide or the titanium chloride is reduced to produce Ti in these methods, and the obtained Ti exists in the state in which Ti of a solid matter (powdery matter or granular matter) is mixed with the molten salt because the molten salt provides a reaction field where the reducing reaction undergoes at that time. Therefore, a manipulation (process) is required to separate Ti from the molten salt in which Ti exists in the mixed state.

Currently, in the Kroll method generally used as an industrial metallic Ti production method, because the yet-to-be-reacted Mg and a magnesium chloride (MgCl₂) which is of a by-product are mixed in the sponge metallic Ti obtained through the reducing process, the yet-to-be-reacted Mg and MgCl₂ are vaporized and removed by heating through a vacuum separation process, and the high-purity sponge metallic Ti is separated and recovered. According to the Kroll method, the high-quality metallic Ti is obtained. However, a large amount of thermal energy is required to evaporate Mg and MgCl₂ which permeated into the sponge's fine structure.

In the method proposed in Japanese Patent Application Publication No. 2004-52037 in which the titanium oxide is reduced by an electrolytic Ca and univalent calcium ion (Ca⁺), a sponge metallic Ti is taken out to the outside of the reaction tank, and the sponge metallic Ti is separated and recovered by applying water washing and dilute hydrochloric acid washing to the sponge metallic Ti to which the salt such as the calcium chloride adheres. In the method disclosed in International Patent Publication No. 2002-517613, Ti is obtained while mixed with the molten salt such as CaCl₂, the manipulation for removing Ti from the adhering molten salt by the water washing is required after Ti is appropriately comminuted.

Even in the metallic Ti production in which TiCl₄ is reduced by Ca, in the finial separation and recovery process, the molten CaCl₂ liquid in which the powdery and granular metallic Ti is mixed is taken out to the outside of the reactor vessel and Ti is separated by a squeezing manipulation of mechanical compression. In this case, the adhering molten salt is removed by the water washing or the like after the separation.

Although the water washing process is relatively simple work, many man-hours and a large space are required due to a wet process. It is not easy to remove a residual water after the water washing. The insufficient removal of the water has possibly a negative influence on the Ti quality such that an oxygen content and a hydrogen content of the obtained Ti are increased. Even if the produced Ti is exposed to an open air after cooling, an oxidation takes place at a surface of Ti to decrease its quality. Additionally, a large amount of energies are required in order that CaCl₂ which is melted once in the water and separated from Ti is transformed from the aqueous solution state into the molten CaCl₂ liquid which can be used as a raw material of the electrolysis for reusing Ca.

### DISCLOSURE OF THE INVENTION

An object of the invention is to provide a method for separating and recovering the high-quality high-melting-point metal from the molten salt in which the high-quality high-melting-point metal is mixed, particularly a method for with less energy efficiently separating and recovering the high-quality Ti or Ti alloy from the CaCl₂-containing molten salt in which the Ti or Ti alloy produced by reducing TiCl₄ by Ca is mixed.

In order to achieve the object, the inventors studied a method in which the mechanical squeezing manipulation and the water washing were not used, and the inventors performed experiments to study a possibility of the Ti separation (liquid phase separation) in the state where the mixed substance is heated to a temperature at which the Ti is melted (dissolved) and the mixed substance exists in the liquid phase, when the metallic Ti is separated and recovered from the mixed substance in which the metallic Ti produced by the Ca reduction, the molten CaCl₂, and the remaining yet-to-be-reacted Ca are mixed.

The study is inspired by the following facts. That is, CaCl₂ has a boiling point (2008 °C) higher than a melting point (1680 °C) of Ti, and CaCl₂ has a specific gravity of about 2 in the liquid-phase state while Ti has a specific gravity of about 4.5, so that the liquid phase separation between CaCl₂ and Ti can be achieved when the mixed substance is kept at temperatures not less than the melting point of Ti.

In the experiment, the metallic Ti and CaCl₂ whose quantities are substantially equal to each other are loaded in a water-cooled copper crucible, the metallic Ti and CaCl₂ are heated to temperatures not less than the melting point of Ti, and the whole of the metallic Ti and CaCl₂ is melted. As a result, the experiment shows that the metallic Ti and CaCl₂ are clearly separated according to a difference in specific gravity.

For both the Ti recovery achieved by the liquid phase separation and the Ti recovery achieved by the vacuum separation adopted in the conventional Kroll method, a composition (that is, mixed ratio of "Ti, CaCl₂, and residual Ca" or "Ti, MgCl₂, and yet-to-be-reacted Mg") of the mixed substance is properly premised according to an actual condition to estimate thermal energies (equivalent to electric power) necessary for the recovery. In the required energy, given that the latter (Ti recovery achieved by the vacuum separation) is set to 100, the former (Ti recovery achieved by the liquid phase separation) is 38. Accordingly, it is found that the energies can significantly be saved by applying the liquid phase separation for the Ti recovery.

The reason why the large amount of thermal energies are required for the vacuum separation in the Ti recovery is that not only the heat of vaporization is required to vaporize and separate MgCl₂ and yet-to-be-reacted Mg, but also it takes long time to thoroughly allow vaporization and separation deep into a center portion in the reactor vessel. On the other hand, in the Ti recovery achieved by the liquid phase separation, CaCl₂ is not vaporized because of CaCl₂ having the high boiling point. That is one of advantages in the Ti recovery achieved by the liquid phase separation.

The inventors also found that Ca melted in CaCl₂ plays an important role in separating Ti and CaCl₂. That is, in performing the liquid phase separation of Ti by heating and melting CaCl₂ in which Ti is mixed, Ti starts to dissolve in CaCl₂ and gets mixed in the granular form when Ca does not exist. However, when Ca is melted in CaCl₂ even slighly, the melting of Ti into CaCl₂ is suppressed and the Ti concentration in CaCl₂ is remarkably decreased after Ti is separated.

Accordingly, in performing the liquid phase separation of Ti, the decrease in Ti recovery percentage can be suppressed by melting Ca in CaCl₂. Furthermore, Ca is circulated while CaCl₂ is used as a medium in the method for producing Ti or Ti alloys by reducing TiCl₄ with Ca, proposed by the inventor. Therefore, when Ti is mixed in CaCl₂, there likely arises problems in the electrolysis process. However, the risk of raising the problem is erased by the invention.

The invention is made based on such ideas and the results of the studies, and a gist of the invention pertains to a following high-melting-point metal separation and recovery method.

That is, the invention is a high-melting-point metal separation and recovery method in which a molten salt mixed with a high-melting-point metal is melted in an inert gas atmosphere to perform liquid phase separation of the high-melting-point metal, the molten salt being used as a reaction field.

Ti and Zr can be cited as an example of the "high-melting-point metal".

As used herein, "being mixed" shall mean that the mixed state is not a homogeneous phase. That is, "(be) mixed" shall mean that the high-melting-point metal in the solid phase exists in the molten salt, whereas the substance containing the "mixed" component is also referred to as "mixed substance".

The "reaction field" shall mean a region where the reaction undergoes. In such cases, the "reaction field" shall mean the molten salt which acts as the reaction field, i.e., the molten salt where the reaction of some kind is in progress.

The "melting" shall mean a manipulation for heating the molten salt, in which the high-melting-point metal is mixed, to transform the whole of the molten salt into the liquid state.

The "liquid phase separation" shall mean, as described above, the separation in a state of having the mixed substance in the liquid phase. In such cases, the "liquid phase separation" shall mean that the high-melting-point metal and the molten salt are vertically separated by the difference in specific gravity while existing in the liquid phase.

The molten salt in which the high-melting-point metal is mixed is not one in which the high-melting-point metal is simply mixed in the usual molten salt, but the one that acts as the reaction field, i.e., the one that is taken out from an arbitrary process. The molten salt may be solidified and apparently formed in the solid-phase state, when the separation and recovery method of the invention is applied. This is because the molten salt becomes the molten state in the melting process.

The molten salt in which the high-melting-point metal is mixed is melted to implement the separation and recovery method of the invention. That is, the molten salt in which the high-melting-point metal is mixed is heated until the whole of the molten salt becomes the liquid state, which separates the high-melting-point metal and the molten salt as the reaction field in the liquid phase. That is, the separation undergoes by a difference in specific gravity, whereby usually the molten salt is located in an upper layer while the high-melting-point metal is located in a lower layer.

Assuming that M is a melting point of the high-melting-point metal to be separated and recovered and B is a boiling point of the molten salt, when the molten salt satisfies a relationship of B>M, the high-melting-point metal having the melting point M can be used as the target. However, the kinds of the molten salt that can be used in practice are relatively limited due to restrictions by handling difficulties, characteristics (particularly, a harmful effect on an environment), prices, and the like. For example, in the case where Ti (melting point of 1680 °C) is the target high-melting-point metal, the molten salt may be represented by CaCl₂ (boiling point of 2008 °C), LaCl₃ (boiling point of 1710 °C), SnCl₃ (boiling point of 2040 °C), CaF₂ (boiling point of 2510 °C), or BaF₂ (boiling point of 2137 °C).

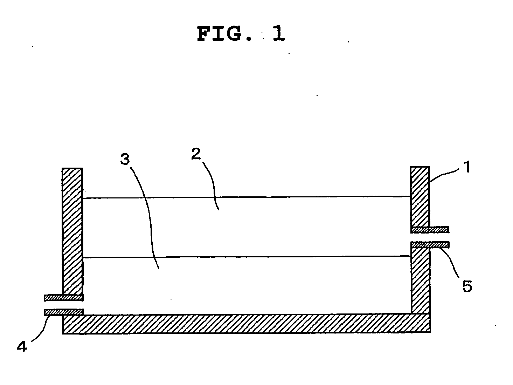

Fig. 1 is a view schematically illustrating the way that the high-melting-point metal separation and recovery method according to the invention is implemented to separate the high-melting-point metal from the molten salt.

In Fig. 1, the molten salt in which the high-melting-point metal is mixed is loaded in a reactor vessel 1, and the molten salt and the high-melting-point metal are heated to a molten state. The liquid phase separation undergoes between the high-melting-point metal and the molten salt in the molten state due to the difference in specific gravity. In the example shown in Fig. 1, the liquid phase separation undergoes in such a manner that a molten salt 2 is located in the upper layer while a high-melting-point metal 3 is located in the lower layer, and the high-melting-point metal 3 can be taken out and recovered from a high-melting-point metal discharge port 4 disposed at a bottom of the heating vessel 1. On the other hand, the molten salt 2 can be taken from a molten salt discharge port 5 disposed in the vicinity of an intermediate-height portion of the reactor vessel 1.

The positions where the high-melting-point metal discharge port 4 and molten salt discharge port 5 are disposed may appropriately be determined in consideration of a mixed ratio of the high-melting-point metal and the molten salt. Using the heating vessel in which the discharge ports are provided at plural positions, any of discharge ports may selectively be used according to each liquid level of the upper layer and lower layer. Loading the molten salt in which the high-melting-point metal is mixed and taking out the high-melting-point metal 3 and the molten salt 2 are performed systematically, which allows the recovery to be semi-continuously or continuously performed.

It is necessary that a heating vessel having high resistance to high temperatures is used so as not to allow.a melt leakage of the loaded materials. For example, a water-cooled copper vessel can be used in the case where CaCl₂ is used as the molten salt while Ti is the high-melting-point metal.

For example, a plasma melting method and a high-frequency induction melting method can be employed as a heating and melting means.

The reason why the melting is performed in the inert gas atmosphere is that the reaction of the high-melting-point metal with oxygen or other gases and absorption of the oxygen or other gases by the high-melting-point metal are prevented because reactivity is enhanced in any substance in the system under the high-temperature condition. Although a pressure of the inert gas during melting is not particularly limited, usually the melting is performed at a normal pressure (atmospheric pressure).

In the high-melting-point metal separation and recovery method of the invention, it is conceived that "the molten salt may be used as the reaction field in producing the high-melting-point metal and the molten salt mixed with the high-melting-point metal obtained by a reaction in the reaction field is used (this embodiment mode is referred to as Embodiment 1).

The method of Embodiment 1 is the method in which a condition that a molten salt is used as the reaction field in producing the high-melting-point metal to be mixed in said molten salt is added as the subject-matter.

In the high-melting-point metal separation and recovery method (including the method of Embodiment 1), a condition that a boiling point of the molten salt is higher than a melting point of the high-melting-point metal is clearly expressed as one of subject-matters, and the condition may be added (Embodiment 2).

The prerequisite that the boiling point of the molten salt is higher than the melting point of the high-melting-point metal is required in order to implement the separation and recovery method of the invention to perform the liquid phase separation of the high-melting-point metal. The method of Embodiment 2 is the one which clearly specifies this.

In the high-melting-point metal separation and recovery method (including the methods of Embodiments 1 and 2) of the invention, the molten salt containing CaCl₂ may be used (Embodiment 3). The "molten salt containing CaCl₂" shall mean a molten salt containing only the molten CaCl₂ or a molten salt in which CaF₂ and the like are added to the molten CaCl₂ to lower the melting point or to adjust its viscosity or the like.

The suitable reaction field can be formed by applying the method of Embodiment 3 in the case of the embodiment mode in which the high-melting-point metal obtained by reducing a after-mentioned high-melting-point metal compound (for example, TiCl₄) with Ca is separated and recovered.

In the high-melting-point metal separation and recovery method (any of the methods of Embodiments 1 to 3) of the invention, it is conceived that "the molten salt contains Ca and the high-melting-point metal may be obtained by causing the high-melting-point metal compound to react with Ca in the molten salt" (Embodiment 4).

A high-melting-point metal chloride such as TiCl₄ can be cited as an example of the high-melting-point metal compound. That is, in the method of Embodiment 4, a molten salt is specified as the molten salt in which the high-melting-point metal obtained by causing the high-melting-point metal chloride such as TiCl₄ to react with Ca is mixed.

In the method (the method of Embodiment 4) of the invention, it can be conceived that "the high-melting-point metal is Ti or a Ti alloy and the high-melting-point metal compound contains TiCl₄ (Embodiment 5)".

For example, as schematically shown in an after-mentioned application example of the separation and recovery method of the invention, the mode wherein the liquid phase separation of the metallic Ti is performed by melting the molten salt, in which the metallic Ti obtained by causing TiCl₄ to react with Ca is mixed, corresponds to the method of Embodiment 5. When TiCl₄ and other metallic chloride are caused to react with Ca, the other metallic chloride is simultaneously reduced with Ca to thereby end up having the Ti alloy mixed in the molten salt, so that the Ti alloy can be sep arated and recovered.

In the high-melting-point metal separation and recovery method of the invention, desirably a high-melting-point metal is Ti or a Ti alloy, the molten salt contains CaCl₂ and Ca, and the melting is performed in an inert gas atmosphere or in vacuum (Embodiment 6).

Ca melted in the CaCl₂-containing molten salt suppresses the melting of Ti or the Ti alloy in the molten salt and significantly decreases the Ti concentration in the molten salt after the Ti or the Ti alloy is separated, when the molten salt in which the high-melting-point metal is mixed is heated to perform the liquid phase separation between the molten salt and such a metal,. In an example of the study results, Ti is melted in the molten salt in the range of 0.5 to 1% by mass when the melted Ca does not exists in CaCl₂, and the Ti concentration in the molten salt is decreased to 50 ppm when CaCl₂ contains Ca of 1% by mass.

The application of the method of Embodiment 6 can suppress the melting of Ti or the Ti alloy in the molten salt by a factor of 1/100 or less. The lower limit of the Ca concentration in the molten salt is not limited because this effect can be recognized even if Ca is slightly melted in the molten salt. The upper limit of the Ca concentration in the molten salt is not particularly limited because the effect exhibits even if the Ca concentration is close to a saturation concentration in the CaCl₂-containing molten salt. To stretch a point, the upper limit of the Ca concentration is the saturation concentration (in the case of CaCl₂, about 1.5% by mass) in the CaCl₂-containing molten salt.

The Ca may be contained in a molten salt before the molten salt mixed with Ti or the Ti alloy is melted (i.e., at any time before the melting is started). In other words, in the case where Ca is not contained in the molten salt in which the high-melting-point metal initially produced by the reaction with Ca is mixed, the same effect as the case where Ca is initially contained is obtained even if Ca is added just before the melting is started.

In the separation and recovery method of the invention, as described above, the melting is performed in the inert gas atmosphere. This is because the reaction of the high-melting-point metal with oxygen or other gases and the absorption of the oxygen or other gases in the high-melting-point metal are prevented. Usually the inert gas such as Ar is used. Like Embodiment 6, the melting may be performed in vacuum in melting the CaCl₂-containing molten salt in which Ti or the Ti alloy is mixed. As used herein, the "vacuum" shall mean a low-pressure state. A level of vacuum may appropriately be set to an extent in which the oxidation of Ti or the Ti alloy or reaction of the high-melting-point metal with oxygen or other gases in the high-melting-point metal are prevented.

In the high-melting-point metal separation and recovery method (the method of Embodiment 6) of the invention, desirably a Ca concentration of the molten salt is adjusted in the range of 0.1 to 1.5% by mass before a mixed substance of the molten salt and Ti or the Ti alloy is melted (Embodiment 7).

The effect of suppressing the melting of Ti or the Ti alloy in the molten salt is rather low when the Ca concentration in the molten salt is lower than 0.1% by mass, and a risk of Ca precipitation is generated by a fluctuation in operation condition when the Ca concentration exceeds 1.5% by mass. More desirably the Ca concentration ranges from 0.3 to 1.0% by mass.

As described above, the effect of suppressing the melting of Ti or the Ti alloy in the molten salt is discerned even if Ca is slightly melted in the molten salt. Furthermore, the melting of Ti in CaCl₂ can effectively be suppressed when the method of Embodiment 7 in which the Ca concentration in the molten salt is adjusted within the above range is applied before the melting.

In the method of Embodiment 6 or 7, preferably Ca is added in the molten salt when a Ca concentration in the molten salt is lower than 0.1% by mass before the mixed substance of the molten salt and Ti or the Ti alloy is melted (Embodiment 8).

The method of Embodiment 8 is the one specifying an operational mode in which the Ca concentration in the molten salt is controlled and properly adjusted before the melting. The melting of Ti can effectively be suppressed to assuredly perform the separation between CaCl₂ and Ti or the Ti alloy.

Although measurement of the Ca concentration can be made by a hydrogen generation method, a neutralization titration method, or the like, the Ca concentration may indirectly be controlled based on material balances of an actual operation performance.

In the separation and recovery method of the invention, the methods of Embodiments 4 to 8 are the ones which can be suitably performed when the molten salt contains CaCl₂ while Ti or the Ti alloy is the high-melting-point metal. That is, the presence of the melted Ca in CaCl₂ suppresses the melting of Ti or the Ti alloy in CaCl₂ to significantly decrease the Ti concentration in CaCl₂ after the liquid phase separation, which allows the Ti recovery percentage to be enhanced.

Further, in the production of Ti or the Ti alloy by the Ca reduction in which Ca is circularly used by virtue of CaCl₂ as a medium, although the melting of Ti or the Ti alloy in CaCl₂ should possibly become troublesome in the electrolysis process, the risk of the melting of Ti or the Ti alloy in CaCl₂ can be eliminated.

In the high-melting-point metal separation and recovery method (any of the methods of Embodiments 1 to 8) of the invention, "desirably all or part of the molten salt in which the high-melting-point metal obtained by the reaction is mixed is maintained in a molten state until melted in an inert gas atmosphere" (Embodiment 9).

As specifically described later, the application of the method of Embodiment 9 can save the thermal energies necessary to melt the solidified-state mixed substance consisted of the high-melting-point metal and the molten salt. Desirably the whole of the mixed substance is maintained in a molten state. However, the thermal energies can be saved even if part of the mixed substance is melted.

In the high-melting-point metal separation and recovery method (any of the methods of Embodiments 4 to 9) of the invention, Ca may be vaporized and separated when the molten salt with remnants of Ca is melted in an inert gas atmosphere after the reaction with the high-melting-point metal compound (Embodiment 10).

That is, Ca can be removed from the molten salt after Ti or the Ti alloy is separated, and the method of Embodiment 10 is a desirable method when the molten salt separated from the high-melting-point metal compound is reused. However, in this case, it is considered that Ca is not completely removed but part thereof is retained in CaCl₂.

The separation and recovery method of Embodiment 10 will specifically be described later in an application example of the separation and recovery method of the invention. For example, in the case where TiCl₄ is reduced with Ca to produce the metallic Ti, when the method of Embodiment 10 is applied to the process of separating the metallic Ti, desirably Ca which obstructs the electrolysis can be removed in performing the electrolysis of the molten salt including CaCl₂.

### BRIEF DESCRIPTION OF THE DRAWINGS

Fig. 1 is a view schematically illustrating a state in which a high-melting-point metal separation and recovery method according to the invention is implemented to separate a high-melting-point metal from a molten salt; and
Fig. 2 is a view illustrating a configuration example of an apparatus for producing a metallic Ti by reducing TiCl₄ with Ca.

### BEST MODE FOR CARRYING OUT THE INVENTION

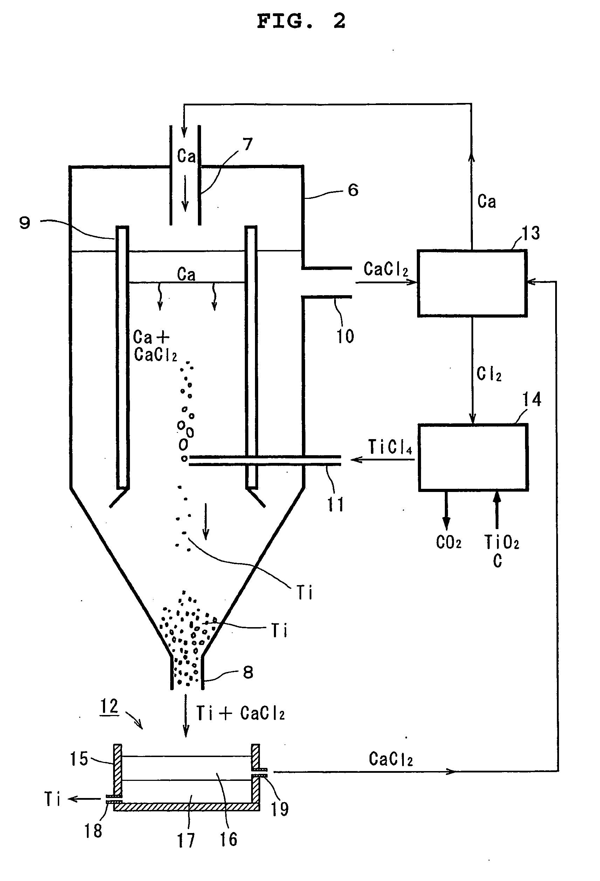

A best mode for carrying out the invention will be described below with reference to the drawing. Fig. 2 is a view illustrating a configuration example of an apparatus for producing a metallic Ti by reducing TiCl₄ with Ca. A process enabling to implement a separation and recovery method of Embodiment 6 is incorporated into the configuration of Fig. 2.

Referring to Fig. 2, a reducing agent feed pipe 7 for feeding Ca which is of a reducing agent is provided in a ceiling portion of a reactor vessel 6. A bottom of the reactor vessel 6 is tapered downward while a diameter of the reactor vessel 6 is gradually reduced in order to promote discharge of produced Ti granules. A Ti discharge pipe 8 is provided in a central portion at lower end of the reactor vessel 6 to discharge the produced Ti granules.

On the other hand, a cylindrical separation wall 9 is disposed inside the reactor vessel 6 while a predetermined gap is provided between the separation wall 9 and an inner surface of a straight body portion of the reactor vessel 6. A molten salt discharge pipe 10 is provided in an upper portion of the reactor vessel 6 to discharge CaCl₂ in the reactor vessel 6 to the side. A raw material feed pipe 11 for feeding TiCl₄ which is of a raw material to Ti is provided in a lower portion of the reactor vessel 6 while piercing through the separation wall 9 to reach a central portion of the reactor vessel 6.

The molten CaCl₂ liquid in which Ca is melted is held as the molten salt in the reactor vessel 6. A level of the molten CaCl₂ liquid is set higher than the molten salt discharge pipe 10 and lower than an upper end of the separation wall 9. The molten Ca liquid is held on the molten CaCl₂ liquid inside the separation wall 9.

Under this condition, a TiCl₄ gas is supplied to the molten CaCl₂ liquid located inside the separation wall 9 through the raw material feed pipe 11. This enables TiCl₄ to be reduced by Ca in the molten CaCl₂ liquid inside the separation wall 9 to produce the granular metallic Ti in the molten CaCl₂ liquid. The Use of the raw material in which the TiCl₄ gas and other metallic chloride gas are mixed can produce the Ti alloy. The TiCl₄ gas and other metallic chloride gas are simultaneously reduced by Ca, so that the Ti alloy granules can be produced.

The Ti granules produced in the molten CaCl₂ liquid located inside the separation wall 9 in the reactor vessel 6 move downward through the molten CaCl₂ liquid and deposited on the bottom of the reactor vessel 6. The deposited Ti granules are appropriately taken out downward from the Ti discharge pipe 8 along with the molten CaCl₂ liquid, and the deposited Ti granules are delivered to a separation process 12. In this case, some amount of yet-to-be-reacted Ca remains in the CaCl₂ liquid taken out.

The molten CaCl₂ liquid whose Ca is consumed by the reducing reaction inside the separation wall 9 moves upward at the outside of the separation wall 9 via the bottom of the separation wall 9, and the molten CaCl₂ liquid is discharged from the molten salt discharge pipe 10. The discharged molten CaCl₂ liquid is delivered to an electrolysis process 13.

Inside the separation wall 9, Ca is replenished to the molten CaCl₂ liquid from the molten Ca liquid held on the molten CaCl₂ liquid. At the same time, Ca is replenished onto the molten CaCl₂ liquid through the reducing agent feed pipe 7.

On the other hand, in the separation process 12, the Ti granules taken out along with the molten CaCl₂ liquid are loaded in a heating vessel 15, the Ti granules are also heated to be in a molten state, and the separation is generated by the difference in specific gravity, whereby a molten CaCl₂ liquid 16 is located in an upper layer while a metallic Ti 17 is located in a lower layer. The molten CaCl₂ liquid 16 in the upper layer is taken out from a molten salt discharge port 19, and the molten CaCl₂ liquid 16 is delivered to the electrolysis process 13 along with the molten CaCl₂ liquid taken out from the reactor vessel 6. The metallic Ti 17 in the lower layer is taken out from a high-melting-point metal discharge port 18, and the metallic Ti 17 is solidified to yield an ingot.

Desirably a temperature during melting ranges from 1680 to 1750 °C. Because the melting temperature of Ti is 1680 °C, the Ti granules are not melted when the temperature is lower than this. The temperature exceeding 1750 °C easily reduces durability of facilities such as the heating vessel. The temperature exceeding 1750 °C is disadvantageous from the viewpoint of energies necessary for heating.

In the electrolysis process 13, the molten CaCl₂ liquid introduced from the reactor vessel 6 and the separation process 12 is separated into Ca and the Cl₂ gas through the electrolysis. Ca and CaCl₂ are returned to the reactor vessel 6. Because CaCl₂ in which Ca is melted is used in the reactor vessel 6, it is not necessary to separate Ca and CaCl₂.

The Cl₂ gas generated in the electrolysis process 13 is delivered to a chlorination process 14. In the chlorination process 14, TiO₂ is chlorinated to produce TiCl₄. The oxygen of the by-product is discharged in the form of CO₂ by simultaneously using carbon powders (C). The produced TiCl₄ is introduced into the reactor vessel 6 through the raw material feed pipe 11. Thus, Ca which is of the reducing agent and Cl₂ gas are circulated by the circulation of CaCl₂.

That is, the metallic Ti production process is an example to which the separation and recovery method of Embodiment 6 is applied. In the separation and recovery method of Embodiment 6, the molten salt in which the metallic Ti is mixed is melted to perform the liquid separation of the metallic Ti. According to the metallic Ti production process, the metallic Ti is continuously produced just by essentially replenishing TiO₂ and C.

In the separation and recovery method (any of the methods of Embodiments 1 to 8) of the invention, all or part of the molten salt in which the high-melting-point metal obtained by the reaction is mixed is desirably maintained in a molten state until being melted in an inert gas atmosphere (Embodiment 9).

When Embodiment 9 is applied to the example of the metallic Ti production process shown in Fig. 2, the mixed substance of the Ti granules taken out from the Ti discharge pipe 8 and the molten CaCl₂ liquid is maintained in a molten state until being delivered to the separation process 12 and loaded in the heating vessel 15. That is, the mixed substance of the Ti granules is loaded in the heating vessel 15 while the Ti granules are mixed in the molten CaCl₂ liquid. Even if part of the molten CaCl₂ liquid is solidified, although the energy is required to melt the part of the molten CaCl₂ liquid again, there is no trouble on the separation and recovery manipulation. Application of the method of Embodiment 9 can save the thermal energies necessary to heat and melt the mixed substance to put the whole of the mixed substance in a molten state.

The method of Embodiment 10 is a method for vaporizing and separating Ca when the molten salt having the remnants of Ca after the reaction with the high-melting-point metal compound is melted in an inert gas atmosphere, in the separation and recovery method (one of methods of Embodiment 4 to 9) of the invention.

For example, in the metallic Ti production method shown in Fig. 2, the molten CaCl₂ liquid is separated into Ca and the Cl₂ gas by the electrolysis in the electrolysis process 13. However, when the yet-to-be-reacted Ca remains in the molten CaCl₂ liquid, a reverse reaction in which Ca reacts with Cl₂ produced by the electrolysis to return to CaCl₂ is generated near the anode electrode, which decreases current efficiency. In this case, when the separation and recovery method of Embodiment 10 is applied, Ca in the molten CaCl₂ liquid is removed, so that the decrease in current efficiency caused by the reverse reaction can be suppressed.

In the case where the molten salt contains only CaCl₂ like the above example, because Ca is melted at 845 °C and vaporized at 1420 °C, the large amount of Ca is vaporized and removed in the procedure of melting the mixed substance of the Ti granules and the molten CaCl₂ liquid which are taken out from the Ti discharge pipe 8.

### INDUSTRIAL APPLICABILITY

According to the high-melting-point metal separation and recovery method of the invention, compared with the sponge metallic Ti recovery achieved by the vacuum separation used in the Kroll method, the metallic Ti or the Ti alloy can be recovered with the extremely small amount of energies. The continuous work and saving in labor can also be achieved in the high-melting-point metal separation and recovery method of the invention, and the high-melting-point metal separation and recovery method of the invention can contribute largely to the reduction of production costs. The obtained Ti has good quality because there is no risk of mixing water having the adverse effect on the Ti quality.

Accordingly, the high-melting-point metal separation and recovery method of the invention can effectively be utilized as the separation and recovery method in producing the high-melting-point metal, particularly producing Ti or the Ti alloy through the Ca reduction of TiCl₄.

## Claims

1. A high-melting-point metal separation and recovery method, **characterized in that** a molten salt mixed with a high-melting-point metal is melted in an inert gas atmosphere to perform a liquid phase separation of the high-melting-point metal, the molten salt being used as a reaction field.

2. The high-melting-point metal separation and recovery method according to claim 1, **characterized in that** said molten salt is used as the reaction field in producing said high-melting-point metal and said molten salt is mixed with the high-melting-point metal obtained by a reaction in the reaction field.

3. The high-melting-point metal separation and recovery method according to claim 1 or 2, **characterized in that** a boiling point of said molten salt is higher than a melting point of said high-melting-point metal.

4. The high-melting-point metal separation and recovery method as in any one of claims 1 to 3, **characterized in that** said molten salt contains CaCl₂.

5. The high-melting-point metal separation and recovery method as in any one of claims 2 to 4, **characterized in that** said molten salt contains Ca and the high-melting-point metal obtained by a reaction is the one obtained by causing a compound of said high-melting-point metal to react with Ca in said molten salt.

6. The high-melting-point metal separation and recovery method according to claim 5, **characterized in that** the high-melting-point metal is Ti or a Ti alloy and said compound of the high-melting-point metal contains TiCl₄.

7. The high-melting-point metal separation and recovery method according to claim 1, **characterized in that** the high-melting-point metal is Ti or a Ti alloy, the molten salt contains CaCl₂ and Ca, and said melting is performed in an inert gas atmosphere or in vacuum.

8. The high-melting-point metal separation and recovery method according to claim 7, **characterized in that** a Ca concentration of the molten salt is adjusted in the range of 0.1 to 1.5% by mass before a mixed substance of said molten salt and Ti or the Ti alloy is melted.

9. The high-melting-point metal separation and recovery method according to claim 7 or 8, **characterized in that** Ca is added in said molten salt when the Ca concentration in the molten salt is less than 0.1% by mass before the mixed substance of said molten salt and Ti or the Ti alloy is melted.

10. The high-melting-point metal separation and recovery method as in any one of claims 2 to 9, **characterized in that** all or part of the molten salt in which the high-melting-point metal obtained by the reaction is mixed is maintained in a molten state until being melted in an inert gas atmosphere.

11. The high-melting-point metal separation and recovery method as in any one of claims 5 to 10, **characterized in that** Ca is vaporized and separated when the molten salt with remnants of Ca is melted in an inert gas atmosphere after the reaction with said compound of the high-melting-point metal.
